# EUROPEAN PATENT APPLICATION

(11) **EP 4 593 315 A1**
(43) Date of publication of application: **30.07.2025**
(21) Application number: 23867626.6
(22) Date of filing: 22.09.2023
(51) Int. Cl.: H04L 5/00

(54) **METHOD AND APPARATUS USED IN NODE FOR WIRELESS COMMUNICATION**

(30) Priority: 24.09.2022 CN 202211168768
(71) Applicant: Apogee Networks, LLC, Dallas, TX 75201 (US)
(72) Inventor: ZHANG, Xiaobo, Shanghai 201206 (CN)
(74) Representative: Gunzelmann, Rainer
(86) International application number: PCT/CN2023/120645
(87) International publication number: WO 2024/061341

(57) **Abstract**

Disclosed in the present application are a method and apparatus used in a node for wireless communication. The method comprises: a first node receiving a first message set and first DCI, wherein a first configuration of each BWP in at least a first BWP depends on the first message set, and the first DCI indicates the at least first BWP; and in response to receiving the first DCI, operating a wireless signal on the at least first BWP, wherein candidate states of the first configuration comprise a first state and a second state; a traditional DCI format merely indicates one BWP, and the DCI format of the first DCI indicates a plurality of BWPs at most; and whether the first DCI comprises first-type information for the first BWP depends on the first message set. The present application improves the scheduling flexibility of DCI, avoids bit waste, and has good compatibility.

## Description

### Technical Field

The present application relates to a transmission method and apparatus in a wireless communication system, and in particular to a scheme and apparatus related to a bandwidth part (BWP).

### Background Art

In conventional wireless communications, a network device dynamically schedules user equipment (UE) through downlink control information (DCI). To reduce the complexity caused by blind decoding (BD), DCI size alignment is proposed to reduce the DCI size monitored by the UE.

In a new radio (NR) system, the BWP is proposed to achieve more flexible spectrum utilization. Generally, a serving cell has only one active uplink BWP and/or one active downlink BWP at a given moment.

### Summary of the Invention

The DCI size typically depends on the parameter configuration of the active BWP. During the dynamic handover process of BWP, the difference between the indicated BWP and the active BWP may cause a mismatch in the DCI size. Through research, the inventors have found that the above-mentioned problem can be further aggravated when the DCI format of a piece of DCI is capable of scheduling a plurality of cells or BWPs, thereby necessitating a new solution.

In view of the above-mentioned problem, the present application discloses a solution. It should be noted that although the present application is primarily described in the context of a piece of DCI scheduling a plurality of cells or BWPs, the present application is also applicable to transmission scenarios where a piece of DCI schedules a single cell. Furthermore, using a unified design scheme for different scenarios (including, but not limited to, a piece of DCI scheduling a plurality of cells and a piece of DCI scheduling a single cell) is beneficial for reducing hardware complexity and cost. In an absence of conflict, an embodiment and features of the embodiment of any node of the present application may be applied to any other node. In an absence of conflict, an embodiment and features of the embodiment in the present application may be combined with each other in any manner.

As one embodiment, the interpretation of the terminology in the present application is based on the definition provided in the TS38 series of the 3GPP specifications.

The present application discloses a method used in a first node for wireless communication, comprising:
receiving a first message set and first DCI, wherein a first configuration of each BWP in at least a first BWP depends on the first message set, and the first DCI indicates the at least first BWP; and
in response to receiving the first DCI, operating a wireless signal on the at least first BWP,
wherein the operation is receiving or the operation is sending; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; the first configuration applied to the first BWP is the second state, and whether the first DCI comprises the first-type information for the first BWP depends on the first message set.

As one embodiment, compared with the first DCI not comprising the first-type information for the first BWP, the above-mentioned method makes full use of bits in the first DCI, thereby improving the scheduling flexibility.

As one embodiment, the above-mentioned method is compatible with a configuration for the first BWP as much as possible.

As one embodiment, the above-mentioned method depends on the first message set to determine whether the first DCI comprises the first-type information for the first BWP, thereby improving configuration flexibility.

Specifically, according to one aspect of the present application, the above-mentioned method comprises: the first configuration of each BWP in Q1 BWPs depends on the first message set, the Q1 being a positive integer greater than 1; and at least one BWP in the Q1 BWPs does not belong to the at least first BWP.

As one embodiment, the above-mentioned method is compatible with a configuration for the first BWP as much as possible.

As one embodiment, the above-mentioned method avoids waste of bits in the first DCI, thereby improving scheduling flexibility as much as possible.

Specifically, according to one aspect of the present application, the above-mentioned method comprises: the first configuration of only Q2 BWPs in the Q1 BWPs is the second state, the Q2 being a positive integer not greater than the Q1; and when a first configuration in the at least first BWP is the number of BWPs of the second state not exceeding the Q2, the first DCI comprises the first-type information for the first BWP.

As one embodiment, the above-mentioned method avoids introducing a new DCI size, thereby reducing complexity of BD.

Specifically, according to one aspect of the present application, the above-mentioned method comprises: whether the first DCI comprises the first-type information for the first BWP depends on at least one of a BWP identity (BWP-Id) of the first BWP and a cell identity of the first serving cell.

As one embodiment, the above-mentioned method implicitly determines a priority of a BWP according to a BWP-Id or a cell identity, thereby reducing signaling overhead.

Specifically, according to one aspect of the present application, the above-mentioned method comprises: if the first DCI comprises the first-type information for the first BWP, a position of a bit field used to indicate the first-type information for the first BWP in the first DCI depends on at least one of a BWP-Id of the first BWP and a cell identity of the first serving cell.

As one embodiment, the above-mentioned method ensures that UE and a base station have the same understanding of a first DCI and reduces unnecessary redundant overhead.

Specifically, according to one aspect of the present application, the above-mentioned method comprises: the operation is sending; and the first configuration comprises whether a phase-tracking reference signal-demodulation reference signal (PTRS-DMRS) association field is present or not, the first state comprises an absence of the PTRS-DMRS association field, the second state comprises a presence of the PTRS-DMRS association field, and the first-type information comprises an association between a PTRS port and a DMRS port.

As one sub-embodiment of the above-mentioned embodiment, the first configuration is configured by parameters such as *PTRS-UplinkConfig,* whether a transform precoder is enabled, and *maxRank.* For specific implementations, refer to TS38.212.

Specifically, according to one aspect of the present application, the above-mentioned method comprises: the first configuration is *maxNrofCodeWordsScheduledByDCI,* the first state is 1, the second state is 2, and the first-type information comprises a New Data Indicator (NDI) for a transport block 2.

Specifically, according to one aspect of the present application, the above-mentioned method comprises: the first configuration is a presence of a transmission configuration indication (TCI) in DCI, the first state is being not enabled (or disabled), the second state is being enabled, and the first-type information comprises a TCI-state.

The present application discloses a method used in a second node for wireless communication, comprising:
sending a first message set and first DCI, wherein a first configuration of each BWP in at least a first BWP depends on the first message set, and the first DCI indicates the at least first BWP; and
in response to sending the first DCI, executing a wireless signal on the at least first BWP,
wherein the execution is sending or the execution is receiving; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; the first configuration applied to the first BWP is the second state, and whether the first DCI comprises the first-type information for the first BWP depends on the first message set.

Specifically, according to one aspect of the present application, the above-mentioned method comprises: the first configuration of each BWP in Q1 BWPs depends on the first message set, the Q1 being a positive integer greater than 1; and at least one BWP in the Q1 BWPs does not belong to the at least first BWP.

Specifically, according to one aspect of the present application, the above-mentioned method comprises: the first configuration of only Q2 BWPs in the Q1 BWPs is the second state, the Q2 being a positive integer not greater than the Q1; and when a first configuration in the at least first BWP is the number of BWPs of the second state not exceeding the Q2, the first DCI comprises the first-type information for the first BWP.

Specifically, according to one aspect of the present application, the above-mentioned method comprises: whether the first DCI comprises the first-type information for the first BWP depends on at least one of a BWP-Id of the first BWP and a cell identity of the first serving cell.

Specifically, according to one aspect of the present application, the above-mentioned method comprises: if the first DCI comprises the first-type information for the first BWP, a position of a bit field used to indicate the first-type information for the first BWP in the first DCI depends on at least one of a BWP-Id of the first BWP and a cell identity of the first serving cell.

Specifically, according to one aspect of the present application, the above-mentioned method comprises: the execution is receiving; and the first configuration comprises whether a PTRS-DMRS association field is present or not, the first state comprises an absence of the PTRS-DMRS association field, the second state comprises a presence of the PTRS-DMRS association field, and the first-type information comprises an association between a PTRS port and a DMRS port.

Specifically, according to one aspect of the present application, the above-mentioned method comprises: the first configuration is *maxNrofCodeWordsScheduledByDCI,* the first state is 1, the second state is 2, and the first-type information comprises an NDI for a transport block 2.

Specifically, according to one aspect of the present application, the above-mentioned method comprises: the first configuration is a presence of a TCI in DCI, the first state is being not enabled, the second state is being enabled, and the first-type information comprises a TCI-state.

The present application discloses a first node used for wireless communication, comprising:
a first receiver, receiving a first message set and first DCI, wherein a first configuration of each BWP in at least a first BWP depends on the first message set, and the first DCI indicates the at least first BWP; and
a first processor, in response to receiving the first DCI, operating a wireless signal on the at least first BWP,
wherein the operation is receiving or the operation is sending; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; the first configuration applied to the first BWP is the second state, and whether the first DCI comprises the first-type information for the first BWP depends on the first message set.

The present application discloses a second node used for wireless communication, comprising:
a first transmitter, sending a first message set and first DCI, wherein a first configuration of each BWP in at least a first BWP depends on the first message set, and the first DCI indicates the at least first BWP; and
a second processor, in response to sending the first DCI, executing a wireless signal on the at least first BWP,
wherein the execution is sending or the execution is receiving; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; the first configuration applied to the first BWP is the second state, and whether the first DCI comprises the first-type information for the first BWP depends on the first message set.

### Brief Description of the Drawings

By referring to the detailed description of the non-limiting embodiments with reference to the drawings, other features, objectives and advantages of the present application will become more apparent:
FIG. 1 shows a flowchart of a first message set, first DCI and a wireless signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of wireless communication according to one embodiment of the present application;
FIG. 6 shows a schematic diagram of changing an active BWP according to one embodiment of the present application;
FIG. 7 shows a schematic diagram of dynamic handover of BWPs according to one embodiment of the present application;
FIG. 8 shows a schematic diagram of Q2 bit fields according to one embodiment of the present application;
FIG. 9 shows a schematic diagram of a first bit set according to one embodiment of the present application;
FIG. 10 shows a structural block diagram of a processing apparatus in a first node according to one embodiment of the present application; and
FIG. 11 shows a structural block diagram of a processing apparatus in a second node according to one embodiment of the present application.

### Detailed Description of Embodiments

The technical solution of the present application will be further described in detail below in conjunction with the drawings. It should be noted that, in an absence of conflict, an embodiment and features of the embodiment in the present application may be combined with each other in any manner.

### Embodiment 1

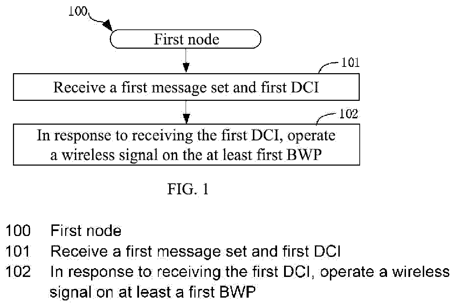

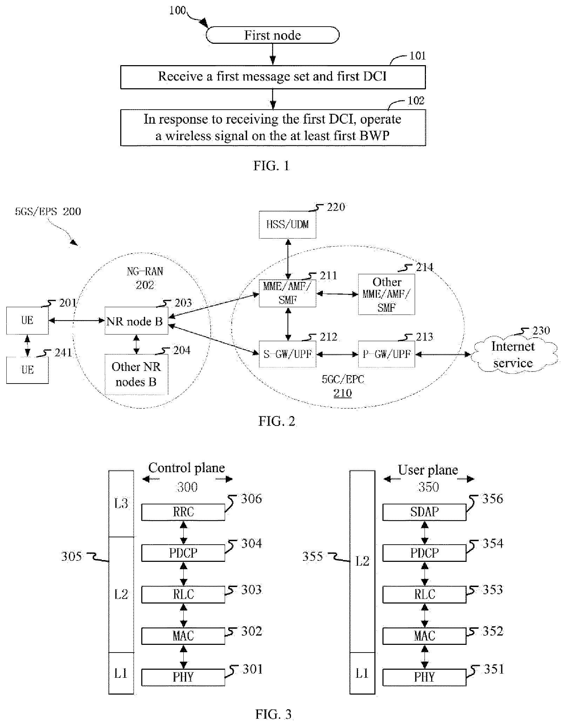

Embodiment 1 illustrates a flowchart of a first message set, first DCI and a wireless signal according to one embodiment of the present application, as shown in FIG. 1. In 100 shown in FIG. 1, each box represents one step.

A first node 100 receives a first message set and first DCI in step 101, wherein a first configuration of each BWP in at least a first BWP depends on the first message set, and the first DCI indicates the at least first BWP; in response to receiving the first DCI, operates a wireless signal on the at least first BWP in step 102; and
in Embodiment 1, the operation is receiving, or the operation is sending; candidate state of the first configuration comprises a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; the first configuration applied to the first BWP is the second state, and whether the first DCI comprises the first-type information for the first BWP depends on the first message set.

As one embodiment, the first message set is a higher layer signaling.

As one embodiment, the first message set comprises a plurality of radio resource control (RRC) information elements (IE).

As one embodiment, the operation is receiving, and when the first configuration depends on one BWP-Downlink IE in the first message set, the first message set indicates the first configuration for a BWP configured by the one BWP-Downlink IE.

As one embodiment, the operation is receiving, and when the first configuration is indicated by any ControlResourceSet IE in one BWP-Downlink IE in the first message set, the first message set indicates the first configuration for a BWP configured by the one BWP-Downlink IE.

As one embodiment, the operation is sending, and when the first configuration depends on one BWP-Uplink IE in the first message set, the first message set indicates the first configuration for a BWP configured by the one BWP-Uplink IE.

As one embodiment, the operation is sending, when the first configuration is indicated by any physical uplink control channel configuration (PUCCH-Config) IE in one BWP-Uplink IE in the first message set, the first message set indicates the first configuration for a BWP configured by the one BWP-Uplink IE.

As one embodiment, a first bit group in the first DCI indicates the at least first BWP, and the first bit group comprises a plurality of bits.

As one embodiment, the first bit group comprises a first bit subgroup and a second bit subgroup; the first bit subgroup indicates not more than 4 serving cells; the second bit subgroup indicates one BWP for each of the not more than 4 serving cells; and a BWP indicated by the second bit subgroup constitutes the at least first BWP.

As one embodiment, the first bit subgroup is a carrier indicator (CI) field, and the second bit subgroup is a bandwidth part indicator (BWP indication) field.

As one sub-embodiment of the above-mentioned embodiment, the bandwidth part indicator field indicates a plurality of BWPs.

As one embodiment, the second bit subgroup comprises L1 bandwidth part indicator fields, wherein the L1 is the number of serving cells indicated by the first bit subgroup, and the L1 bandwidth part indicator fields respectively indicate L1 BWPs, and the L1 BWPs are respectively on L1 serving cells indicated by the first bit subgroup.

As one embodiment, the first bit group comprises a plurality of bandwidth part indicator (BWP indication) fields.

As one embodiment, each BWP in the at least first BWP is indicated by one bandwidth part indicator field in the first bit group, and one bandwidth part indicator field in the first bit group merely indicates one BWP.

As one embodiment, the at least first BWP does not comprise two BWPs on the same serving cell.

As one embodiment, the behavior of operating a wireless signal on the at least first BWP comprises: operating a wireless signal on each BWP in the at least first BWP.

As one embodiment, the behavior of operating a wireless signal on the at least first BWP comprises: operating a wireless signal on some BWPs in the at least first BWP.

As one embodiment, the behavior of operating a wireless signal on the at least first BWP in response to receiving the first DCI means: the first DCI is used to schedule the wireless signal.

As one embodiment, the behavior of operating a wireless signal on the at least first BWP in response to receiving the first DCI means: the first DCI comprises scheduling information of the wireless signal, and the scheduling information comprises an occupied time-frequency resource, a modulation and coding scheme (MCS), a new data indicator (NDI) and a redundancy version (RV), etc.

As one embodiment, the behavior of operating a wireless signal on the at least first BWP in response to receiving the first DCI means: the first DCI is used to schedule each physical layer channel carrying the wireless signal; the operation is receiving and the physical layer channel is a physical downlink shared channel (PDSCH), or the operation is sending and the physical layer channel is a physical uplink shared channel (PUSCH).

Typically, the operation is receiving, and the first DCI is used to change an active downlink BWP on the first serving cell from the active BWP on the first serving cell to the first BWP.

Typically, the operation is sending, and the first DCI is used to change an active uplink BWP on the first serving cell from the active BWP on the first serving cell to the first BWP.

As one embodiment, the active BWP on the first serving cell refers to an active downlink BWP before receiving the first DCI, or an active uplink BWP before receiving the first DCI.

As one embodiment, the traditional DCI format belongs to a DCI format supported by 3GPP release 17.

As one embodiment, the operation is sending, and the traditional DCI format is DCI format 0_0, or DCI format 0_1, or 0_2.

As one embodiment, the operation is receiving, and the traditional DCI format is DCI format 1_0, or DCI format 1_1, or 1_2.

As one embodiment, the DCI format of the first DCI indicates 4 BWPs at most.

As one embodiment, the maximum number of BWPs indicated by the DCI format of the first DCI is configurable.

As one embodiment, the first configuration of one BWP is indicated by at least one parameter in the first message set, or the first configuration of one BWP is indicated by whether the first message set comprises at least one parameter.

### Embodiment 2

Embodiment 2 shows a schematic diagram of a network architecture according to one embodiment of the present application, as shown in FIG. 2.

FIG. 2 illustrates a network architecture 200 of long-term evolution (LTE), advanced long-term evolution (LTE-A) and future 5G systems. The network architecture 200 of LTE, LTE-A and future 5G systems is called an evolved packet system (EPS) 200. The 5G NR or LTE network architecture 200 may be referred to as a 5G System (5GS)/evolved packet system (EPS) 200 or some other suitable terminologies. The 5GS/EPS 200 may comprise one or more user equipment (UE) 201, one UE241 that communicates with the UE201 on a sidelink, a nextgeneration radio access network (NG-RAN) 202, a 5G core network (5GC)/evolved packet core (EPC) 210, a home subscriber server (HSS)/unified data management (UDM) 220 and an Internet services 230. The 5GS/EPS200 may interconnect with other access networks, but these entities/interfaces are not shown for simplicity. As shown in FIG. 2, the 5GS/EPS200 provides packet switching services. However, those skilled in the art will readily appreciate that the various concepts presented throughout this application can be extended to networks providing circuit switching services. The NG-RAN202 comprises a new radio (NR) node B (gNB)203 and other gNBs 204. The gNB203 provides user and control plane protocol termination towards the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a transmitter receiver point (TRP), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similarly functional apparatus. A person skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises a mobility management entity (MME)/authentication management field (AMF)/session management function (SMF) 211, other MNM/AMF/SMF214, a service gateway (S-GW)/user plane function (UPF) 212, and a packet data network gateway (P-GW)/UPF213. The MME/AMF/SMF211 is a control node that handles a signaling between the UE201 and the 5GC/EPC210. Generally, the MME/AMF/SMF211 provides bearer and connection management. All user Internet protocols (IP) packets are transmitted through the S-GW/UPF212, which is connected to the P-GW/UPF213. The P-GW provides UE IP address allocation and other functions. The P-GW/UPF213 is connected to the Internet service 230. The Internet service 230 comprises operator-corresponding Internet Protocol services, which may specifically comprise Internet, intranet, IP multimedia subsystem (IMS) and packet switching services.

As one embodiment, the first node in the present application is the UE201.

As one embodiment, the second node in the present application is the gNB203.

As one embodiment, a wireless link between the UE201 and the gNB203 comprises a cellular network link.

As one embodiment, a sender of the first message set comprises the gNB203.

As one embodiment, a recipient of the first message set comprises the UE201.

As an embodiment, a sender of the first DCI comprises the gNB203.

As one embodiment, a recipient of the first DCI comprises the UE201.

### Embodiment 3

Embodiment 3 shows a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for a control plane 300 between a first communication node device (UE, a gNB or an RSU in V2X) and a second communication node device (a gNB, UE or an RSU in V2X), or between two pieces of UE, using three layers: Layer 1, Layer 2, and Layer 3. Layer 1 (L1 layer) is the lowest layer and implements various PHY (physical layer) signal processing functions. The layer L1 will be referred to as a PHY301 herein. Layer 2 (L2 layer) 305 is above the PHY301 and is responsible for a link between the first communication node device and the second communication node device, or between two pieces of UE. The L2 layer 305 comprises a medium access control (MAC) sublayer 302, a radio link control (RLC) sublayer 303, and a packet data convergence protocol (PDCP) sublayer 304, which terminates at the second communication node device. The PDCP sublayer 304 provides multiplexing between different radio bearers and logical channels. The PDCP sublayer 304 also provides security by encrypting data packets, and provides inter-cell mobility support for the first communication node device with respect to the second communication node devices. The RLC sublayer 303 provides segmentation and reassembly of upper-layer data packets, retransmission of lost data packets, and reordering of data packets to compensate for out-of-order reception due to a HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. A radio resource control (RRC) sublayer 306 in layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises layer 1 (L1 layer) and layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in L2 layer 355, an RLC sublayer 353 in L2 layer 355, and a MAC sublayer 352 in L2 layer 355, but the PDCP sublayer 354 also provides header compression for upper-layer data packets to reduce radio transmission overhead. The L2 layer 355 in the user plane 350 also comprises a service data adaptation protocol (SDAP) sublayer 356, which is responsible for mapping between QoS flows and data radio bearers (DRB) to support the diversity of services. Although not shown in the figure, the first communication node device may have several upper layers above the L2 layer 355, comprising a network layer (e.g., an IP layer) terminating at the P-GW on a network side and an application layer terminating at the other end of the connection (e.g., remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the first message set is generated in the RRC sublayer 306.

As one embodiment, the first DCI is generated in the PHY301, or the PHY351.

As one embodiment, the first CSI set is generated in the PHY301, or the PHY351.

As one embodiment, the higher layer in this application refers to a layer above a physical layer.

### Embodiment 4

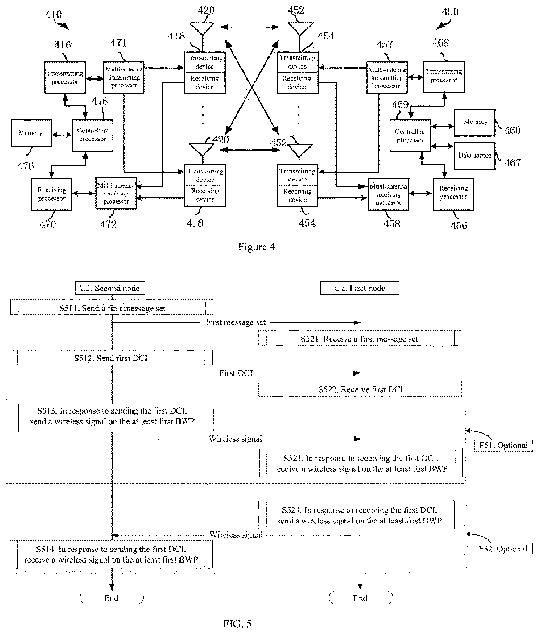

Embodiment 4 illustrates a schematic diagram of a first communication device and a second communication device according to one embodiment of the present application, as shown in FIG. 4. FIG. 4 is a block diagram of a first communication device 410 and a second communication device 450 that communicate with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In transmission from the first communication device 410 to the second communication device 450, at the first communication device 410, upper-layer data packets from a core network are provided to the controller/processor 475. The controller/processor 475 implements functionality of the L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions for the L1 layer (i.e., a physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot frequency) in a time domain and/or frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In transmission from the first communication device 410 to the second communication device 450, at the second communication device 450, each receiving device 454 receives a signal through a corresponding antenna 452 thereof. Each receiving device 454 recovers information modulated onto a radio frequency carrier, converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operations on a baseband multi-carrier symbol stream from the receiving device 454. The receiving processor 456 uses a fast Fourier transform (FFT) to convert the baseband multi-carrier symbol stream after the receiving analog precoding/beamforming operations from a time domain to a frequency domain. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on a physical channel. The upper-layer data and control signals are then provided to the controller/processor 459. The controller/processor 459 implements functions of the L2 layer. The controller/processor 459 may be associated with a memory 460 which stores program codes and data. The memory 460 may be referred to as a computer-readable medium. In a DL, the controller/processor 459 provides demultiplexing between transport and logical channels, packet reassembly, decryption, header decompression, and control signal processing to recover upper-layer data packets from a core network. The upper-layer data packets are then provided to all protocol layers above the L2 layer. Various control signals may also be provided to L3 for L3 processing. The controller/processor 459 is also responsible for error detection using an acknowledgement (ACK) and/or negative acknowledgement (NACK) protocol to support HARQ operations.

In transmission from the second communication device 450 to the first communication device 410, at the second communication device 450, upper-layer data packets are provided to the controller/processor 459 using a data source 467. The data source 467 represents all protocol layers above the L2 layer. Similar to transmission function of the first communication device 410 described in a DL, the controller/processor 459 implements header compression, encryption, packet segmentation and reordering, and multiplexing between logical and transport channels based on radio resource allocation of the first communication device 410, and implements functions of the L2 layer for the user plane and the control plane. The controller/processor 459 is also responsible for HARQ operations, retransmission of lost packets, and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts a baseband symbol stream provided by the multi-antenna transmitting processor 457 into a radio frequency symbol stream, and then provides the radio frequency symbol stream to the antenna 452.

In transmission from the second communication device 450 to the first communication device 410, a function of the first communication device 410 is similar to a receiving function of the second communication device 450 described in transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with a memory 476 which stores program codes and data. The memory 476 may be referred to as a computer-readable medium. The controller/processor 475 provides demultiplexing between transport and logical channels, packet reassembly, decryption, header decompression, and control signal processing to recover upper-layer data packets from the second communication device 450. The upper-layer data packets from controller/processor 475 may be provided to the core network. The controller/processor 475 is also responsible for error detection using an ACK and/or NACK protocols to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least receives a first message set and first DCI, wherein a first configuration of each BWP in at least a first BWP depends on the first message set, and the first DCI indicates the at least first BWP; and in response to receiving the first DCI, operates a wireless signal on the at least first BWP, wherein the operation is receiving or the operation is sending. Candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; and the first configuration applied to the first BWP is the second state, and whether the first DCI comprises the first-type information for the first BWP depends on the first message set.

As one embodiment, the second communication device 450 comprises: a memory storing a computer-readable instruction program, and the computer-readable instruction program generates actions when executed by at least one processor, the actions comprising: receiving a first message set and first DCI, wherein a first configuration of each BWP in at least a first BWP depends on the first message set, and the first DCI indicates the at least first BWP; and in response to receiving the first DCI, operating a wireless signal on the at least first BWP.

As one embodiment, the first communication device 410 comprises: at least one processor and at least one memory, the at least one memory comprising a computer program code; the at least one memory and the computer program code are configured to be used together with the at least one processor. The first communication device 410 apparatus at least sends a first message set and first DCI, wherein a first configuration of each BWP in at least a first BWP depends on the first message set, and the first DCI indicates the at least first BWP; and in response to sending the first DCI, executes a wireless signal on the at least first BWP, wherein the execution is sending or receiving.

As one embodiment, the first communication device 410 comprises: a memory storing a computer-readable instruction program, and the computer-readable instruction program generates actions when executed by at least one processor, the action comprising: sending a first message set and first DCI, wherein a first configuration of each BWP in at least a first BWP depends on the first message set, and the first DCI indicates the at least first BWP; and in response to sending the first DCI, executing a wireless signal on the at least first BWP, wherein the execution is sending or receiving.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used to receive the first message set; and at least one of {the antenna 420, the transmitting device 418, the transmitting processor 416, the multi-antenna transmitting processor 471, the controller/processor 475, and the memory 476} is used to send the first message set.

As one embodiment, at least one of {the antenna 452, the receiving device 454, the receiving processor 456, the multi-antenna receiving processor 458, the controller/processor 459, the memory 460, and the data source 467} is used to receive the first DCI; and at least one of {the antenna 420, the transmitting device 418, the transmitting processor 416, the multi-antenna transmitting processor 471, the controller/processor 475, and the memory 476} is used to send the first DCI.

### Embodiment 5

Embodiment 5 illustrates a flowchart of wireless communication according to one embodiment of the present application, as shown in FIG. 5. In FIG. 5, a first node U1 and a second node U2 are communication nodes transmitted via an air interface. In FIG. 5, a step in box F51 occurs and a step in box F52 does not occur, or the step in box F51 does not occur and the step in box F52 occurs.

For the second node U2, a first message set is sent in step S511; and first DCI is sent in step S512;
for the first node U1, the first message set is received in step S521; and the first DCI is received in step S522; and
in Embodiment 5, a first configuration of each BWP in at least a first BWP depends on the first message set, and the first DCI indicates the at least first BWP; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; and the first configuration applied to the first BWP is the second state, and whether the first DCI comprises the first-type information for the first BWP depends on the first message set.

As one embodiment, the second node U2, in response to sending the first DCI, sends a wireless signal on the at least first BWP in step S513; and the first node U1, in response to receiving the first DCI, receives a wireless signal on the at least first BWP in step S523.

As one embodiment, the second node U2, in response to sending the first DCI, receives a wireless signal on the at least first BWP in step S514; and the first node U1, in response to receiving the first DCI, sends a wireless signal on the at least first BWP in step S524.

As one embodiment, the behavior of receiving (or sending) a wireless signal on the at least first BWP in response to sending the first DCI means: the first DCI is used to schedule the wireless signal.

As one embodiment, the behavior of receiving (or sending) a wireless signal on the at least first BWP in response to sending the first DCI means: the first DCI comprises scheduling information of the wireless signal, and the scheduling information comprises an occupied time-frequency resource, an MCS, an NDI and an RV, etc.

As one embodiment, the behavior of receiving (or sending) a wireless signal on the at least first BWP in response to sending the first DCI means: the first DCI is used to schedule each PUSCH (or PDSCH) carrying the wireless signal.

As one embodiment, the first node U1 is the first node in the present application.

As one embodiment, the second node U2 is the second node in the present application.

As one embodiment, the second node U2 is a serving cell maintenance base station of the first node U1.

As one embodiment, the first configuration of each BWP in Q1 BWPs depends on the first message set, the Q1 being a positive integer greater than 1; and at least one BWP in the Q1 BWPs does not belong to the at least first BWP.

As one embodiment, a payload size of the first DCI depends on the first message set.

As one embodiment, the Q1 is 4.

As one embodiment, the Q1 is not greater than 4.

As one embodiment, before receiving the first DCI, the Q1 BWPs are respectively active BWPs of Q1 serving cells.

As one embodiment, the first DCI schedules the Q1 serving cells, and there is at least one BWP in the Q1 BWPs that is not indicated by the first DCI.

As one embodiment, in the Q1 BWPs, the first configuration of only Q2 BWPs is the second state, the Q2 being a positive integer not greater than the Q1; and when a first configuration in the at least first BWP is the number of BWPs of the second state not exceeding the Q2, the first DCI comprises the first-type information for the first BWP.

As one embodiment, the first DCI comprises Q2 bit fields at most to indicate the first-type information, and each of the Q2 bit fields is applied to one BWP.

As one embodiment, whether the first DCI comprises the first-type information for the first BWP depends on at least one of a BWP-Id of the first BWP and a cell identity of the first serving cell.

As one embodiment, the cell identity is *ServCellIndex.*

As one embodiment, the cell identity is a non-negative integer not greater than 64.

As one embodiment, the cell identity is a physical cell identity (PCI).

As one embodiment, the first-type information for the first BWP is preferentially indicated by the first DCI as the BWP-Id of the first BWP decreases.

As one embodiment, the first-type information for the first BWP is preferentially indicated by the first DCI as the cell identity of the first serving cell decreases.

As one embodiment, a first configuration of a total of Q3 BWPs in the at least first BWP is the second state, the Q3 being greater than the Q2.

As one embodiment, the first-type information of only Q2 higher-priority BWPs in the Q3 BWPs is indicated by the first DCI, and the priority is one of a BWP-Id of the corresponding BWP and a cell identity of the serving cell of a corresponding BWP.

As one embodiment, the priority of one BWP is the sum of a product of a cell identity of a serving cell of the one BWP and 4 or 5, plus a BWP-Id of the one BWP.

As one embodiment, for any two BWPs in the Q3 BWPs, if corresponding cell identities are different, a BWP corresponding to a smaller cell identity has a higher priority; and if corresponding cell identities are the same, a BWP corresponding to a smaller BWP-Id has a higher priority.

As one embodiment, the first-type information of the Q2 higher-priority BWPs is sequentially indicated by Q2 bit fields in the first DCI.

As one embodiment, if the first DCI comprises the first-type information for the first BWP, a position of a bit field used to indicate the first-type information for the first BWP in the first DCI depends on at least one of a BWP-Id of the first BWP and a cell identity of the first serving cell.

As one embodiment, the bit field used to indicate the first-type information for the first BWP is one of Q2 bit fields of the first DCI.

As one sub-embodiment of the above-mentioned embodiment, the bit field used to indicate the first-type information for the first BWP varies with at least one of a BWP-Id of the first BWP and a cell identity of the first serving cell in Q2 bit fields of the first DCI.

As one sub-embodiment of the above-mentioned embodiment, at least one of the BWP-Id of the first BWP and the cell identity of the first serving cell is used to determine the bit field used to indicate the first-type information for the first BWP from the Q2 bit fields.

As one embodiment, a position of the bit field used to indicate the first-type information for the first BWP in a first bit set of the first DCI depends on at least one of a BWP-Id of the first BWP and a cell identity of the first serving cell; and the first bit set of the first DCI is not used to schedule a first-type BWP and is not used to indicate second-type scheduling information, the first-type BWP is a BWP that belongs to both the Q1 BWPs and the at least first BWP, and the number of bits in the first DCI that are used to indicate the second-type scheduling information does not change with the candidate states of the first configuration.

As one embodiment, a payload size of the first DCI does not depend on a configuration of the first BWP.

As one embodiment, steps in box F52 occur and steps in box F51 do not occur; the first configuration comprises whether a PTRS-DMRS association field is present or not, the first state comprises an absence of the PTRS-DMRS association field, the second state comprises a presence of the PTRS-DMRS association field, and the first-type information comprises an association between a PTRS port and a DMRS port.

As one sub-embodiment of the above-mentioned embodiment, the traditional DCI format comprises DCI format 0_1.

As one sub-embodiment of the above-mentioned embodiment, the traditional DCI format comprises DCI format 0_2.

As one embodiment, the first configuration is *maxNrofCodeWordsScheduledByDCI,* the first state is 1, the second state is 2, and the first-type information comprises an NDI for a transport block 2.

As one sub-embodiment of the above-mentioned embodiment, steps in box F51 occur and steps in box F52 do not occur.

As one sub-embodiment of the above-mentioned embodiment, the first-type information comprises an RV for the transport block 2.

As one sub-embodiment of the above-mentioned embodiment, the first-type information comprises an MCS for the transport block 2.

As one sub-embodiment of the above-mentioned embodiment, the traditional DCI format comprises DCI format 1_1.

As one embodiment, the first configuration is a presence of a transmission configuration indication (TCI) in DCI, the first state is being not enabled, the second state is being enabled, and the first-type information comprises a TCI-state.

As one sub-embodiment of the above-mentioned embodiment, steps in box F51 occur and steps in box F52 do not occur.

As one sub-embodiment of the above-mentioned embodiment, the traditional DCI format comprises DCI format 1_1.

As one sub-embodiment of the above-mentioned embodiment, the traditional DCI format comprises DCI format 1_2.

As one sub-embodiment of the above-mentioned embodiment, the traditional DCI format comprises DCI format 4_2.

As one sub-embodiment of the above-mentioned embodiment, the first configuration is one field of one RRC IE, and a name of the one field comprises tci-PresentDCI.

As one sub-embodiment of the above-mentioned embodiment, the first configuration is one field of one RRC IE, and a name of the one field comprises tci-PresentInDCI.

As one sub-embodiment of the above-mentioned embodiment, the first configuration comprises tci-PresentInDCI.

As one sub-embodiment of the above-mentioned embodiment, the first configuration comprises tci-PresentDCI-1-2.

### Embodiment 6

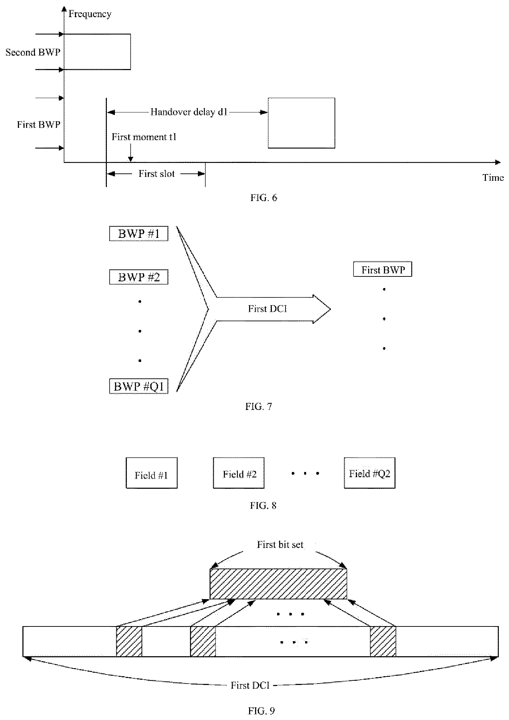

Embodiment 6 illustrates a schematic diagram of changing an active BWP according to one embodiment of the present application, as shown in FIG. 6. A first BWP and a second BWP in FIG. 6 are located on a first serving cell or are configured for the first serving cell.

Before receiving a first DCI, the second BWP is an active BWP of the first serving cell; the first DCI is detected in a first slot; and the first DCI indicates that an active uplink BWP of the first serving cell is modified to the first BWP, or the first DCI indicates that an active downlink BWP of the first serving cell is modified to the first BWP.

As one embodiment, the first DCI indicates that an active uplink BWP of the first serving cell is modified to the first BWP, and a first node is able to send a PUSCH on the first BWP in an uplink slot after a handover delay d1 from the start of the first slot.

As one embodiment, the first DCI indicates that the active uplink BWP of the first serving cell is modified to the first BWP, and the first node stops sending a PUSCH on the first serving cell (i.e., the second BWP) from the first moment t1.

As one embodiment, the first DCI indicates that the active downlink BWP of the first serving cell is modified to the first BWP, and the first node is able to receive a PDSCH on the first BWP in a downlink slot after the handover delay d1 from the start of the first slot.

As one embodiment, the first DCI indicates that the active downlink BWP of the first serving cell is modified to the first BWP, and the first node stops receiving a PUSCH on the first serving cell (i.e., the second BWP) from the first moment t1.

As one embodiment, the handover delay d1 is not less than one slot.

As one embodiment, a length of the handover delay d1 is configurable.

As one embodiment, a length of the handover delay d1 is default.

As one embodiment, the first moment t1 is a cutoff time of a third symbol in the first slot.

As one embodiment, a symbol occupied by the first DCI is not later than the first moment t1.

As one embodiment, the symbol is an orthogonal frequency division multiplexing (OFDM) symbol.

As one embodiment, the symbol is a discrete Fourier transformation (DFT) -spreading (S)-OFDM symbol.

As one embodiment, a payload size of the first DCI depends on a configuration of the second BWP and does not depend on the configuration of the first BWP.

As one embodiment, the first DCI schedules a plurality of serving cells, and the first serving cell is one of the plurality of serving cells.

### Embodiment 7

Embodiment 7 illustrates a schematic diagram of dynamic handover of BWPs according to one embodiment of the present application, as shown in FIG. 7. In Embodiment 7, Q1 BWPs, i.e., BWP #1, #2,..., #Q1 in FIG. 7, are respectively on Q1 serving cells, or are respectively configured for Q1 serving cells.

In Embodiment 7, the first configuration of each BWP in the Q1 BWPs depends on the first message set, Q1 being a positive integer greater than 1; and at least one BWP in the Q1 BWPs does not belong to the at least first BWP.

As one embodiment, a payload size of the first DCI depends on the first configuration of each BWP in the Q1 BWPs.

As one sub-embodiment of the above-mentioned embodiment, the first configuration of each BWP in the Q1 BWPs is used to determine a first payload size, and the payload size of a first DCI is a payload size after the first payload size is aligned with a DCI size.

As one embodiment, the first configuration of only Q2 BWPs in the Q1 BWPs is a second state, and a bit width (i.e., the number of bits) reserved for first-type information in a first DCI increases with the increase of the Q2.

As one embodiment, before the first DCI, the Q1 BWPs are respectively active BWPs of Q1 serving cells; a second BWP is one of the Q1 BWPs, and the first serving cell is one of the Q1 serving cells; and the second BWP is an uplink BWP of the first serving cell, and the first DCI indicates that an active uplink BWP of the first serving cell is changed to a first BWP, or the second BWP is a downlink BWP of the first serving cell, and the first DCI indicates that an active downlink BWP of the first serving cell is changed to a first BWP.

As one embodiment, at least a first BWP indicated by the first DCI comprises Q3 BWPs, the Q3 being a positive integer greater than 1 and not greater than Q1; the Q3 BWPs belong to Q3 serving cells respectively, and at least one serving cell in the Q1 serving cells does not belong to the Q3 serving cells (i.e., is not scheduled by the first DCI); and an active BWP on the at least one serving cell is not changed by the first DCI.

### Embodiment 8

Embodiment 8 illustrates a schematic diagram of Q2 bit fields according to one embodiment of the present application, as shown in FIG. 8. In Embodiment 8, Q2 bit fields, i.e., fields #1,..., #Q2 in FIG. 8, belong to a first DCI; and the Q2 bit fields respectively indicate or are reserved for first-type information of Q2 BWPs.

When a first configuration in the at least first BWP is indicated or scheduled by a first DCI that the number of BWPs of the second state does not exceed the Q2, the first DCI comprises the first-type information for the first BWP.

As one embodiment, all (not more than Q2) BWPs whose first configuration is the second state in the at least first BWP are sequentially indicated by the Q2 bit fields according to a priority.

As one embodiment, when a first configuration in the at least first BWP is indicated or scheduled by a first DCI that the number of BWPs of the second state is less than the Q2, unused bit fields in the Q2 bit fields are used for reserved bits or are fixedly set to 0.

As one embodiment, the Q2 bit fields are contiguous in the first DCI.

As one embodiment, there is no bit in a DCI format of the first DCI that does not belong to the Q2 bit fields and is located between the field #1 and the field #Q2.

As one embodiment, the Q2 bit fields are discrete in the first DCI.

As one embodiment, there is at least one bit or bit field in a DCI format of the first DCI that does not belong to the Q2 bit fields and is located between the field #1 and the field #Q2.

Embodiment 8 can maintain good compatibility with existing systems and avoid designing joint encoding of first-type information for a plurality of BWPs.

In Embodiment 8, the K subfields are respectively used by the first node to determine K cell indexes, and the K cell indexes are respectively allocated to the K cells. In FIG. 8, the K subfields are respectively represented as subfield #0, ..., subfield #(K-1); the K cell indexes are respectively represented as cell index #0, ..., cell index #(K-1).

As one embodiment, any one subfield in the K subfields comprises all or part of bits in a DCI field carrier indicator.

As one embodiment, the K subfields respectively comprise different bits in a DCI field carrier indicator.

As one embodiment, the K subfields respectively comprise all or part of bits in K DCI field carrier indicators.

As one embodiment, the K subfields respectively comprise K DCI field carrier indicators.

As one embodiment, the K subfields are respectively K DCI field carrier indicators.

As one embodiment, any one cell index in the K cell indexes is one ServCellIndex or SCellIndex.

As one embodiment, the definition of the ServCellIndex and the SCellIndex refers to 3GPP TS38.331.

As one embodiment, the K cell indexes are respectively non-negative integers.

As one embodiment, the K cell indexes are respectively non-negative integers not greater than 32.

As one embodiment, the K cell indexes are mutually unequal.

As one embodiment, the K cell indexes are respectively used to identify the K cells respectively.

As one embodiment, the K cell indexes are respectively cell indexes of the K cells.

As one embodiment, the K subfields respectively indicate the K cell indexes.

As one embodiment, the K subfields explicitly indicate the K cell indexes respectively.

As one embodiment, the K subfields respectively indicate codepoints of carrier indicator fields corresponding to the K cell indexes.

As one embodiment, the K subfields respectively indicate values of carrier indicator fields corresponding to the K cell indexes.

As one embodiment, the K subfields implicitly indicate the K cell indexes respectively.

As one embodiment, the K subfields are used to determine the K cells.

As one embodiment, the second field of the first DCI is used to determine the K cells.

As one embodiment, the K subfields respectively indicate the K cells.

As one embodiment, the K subfields belong to K0 subfields, K0 being a positive integer not less than the K; the K0 subfields correspond to K0 cell indexes respectively, and the K cell indexes belong to the K0 cell indexes; for any one given cell index in the K0 cell indexes,when a value of a subfield in the K0 subfields and corresponding to the given cell index is equal to a first value, a cell identified by the given cell index is one of the K cells; and when the value of the subfield in the K0 subfields and corresponding to the given cell index is not equal to the first value, the cell identified by the given cell index does not belong to the K cells.

As one sub-embodiment of the above-mentioned embodiment, the K0 subfields are respectively K0 bits, and the first value is equal to 1.

As one sub-embodiment of the above-mentioned embodiment, the K0 subfields are respectively K0 bits, and the first value is equal to 0.

As one sub-embodiment of the above-mentioned embodiment, the correspondence between the K0 subfields and the K0 cell indexes is configured by a higher-layer signaling.

As one embodiment, the K cell indexes are used to determine the first cell.

As one embodiment, the K cell indexes are used to determine that the first CSI set is sent on the PUSCH of the first cell in the K cells.

As one embodiment, the meaning of the sentence "the second field of the first DCI is used to determine the first cell" comprises:the second field comprises at least one of the K subfields, the K subfields are respectively used to determine the K cell indexes, and the K cell indexes are used to determine the first cell.

As one embodiment, the meaning of the sentence "the second field of the first DCI is used to determine the first cell" comprises: the second field comprises at least one of the K subfields, the K subfields are respectively used to determine the K cell indexes, and the K cell indexes are used to determine that the first CSI set is sent on the PUSCH of the first cell in the K cells.

As one embodiment, which cell in the K cells is configured with a PUCCH is used to determine the first cell.

As one embodiment, which cell in the K cells is configured with a PUCCH is used to determine that the first CSI set is sent on the PUSCH of the first cell in the K cells.

As one embodiment, one of the K cells is configured with a PUCCH.

As one embodiment, only one of the K cells is configured with a PUCCH.

As one embodiment, the meaning of the sentence "the second field of the first DCI is used to determine the first cell" comprises: the second field comprises at least one of the K subfields, the K subfields are respectively used to determine the K cell indexes, and which cell in the K cells is configured with a PUCCH is used to determine the first cell.

As one embodiment, the meaning of the sentence "the second field of the first DCI is used to determine the first cell" comprises: the second field comprises at least one of the K subfields, the K subfields are respectively used to determine the K cell indexes, which cell in the K cells is configured with a PUCCH is used to determine that the first CSI set is sent on the PUSCH of the first cell in the K cells.

As one embodiment, the first cell is a cell configured with a PUCCH in the K cells.

As one embodiment, the first cell is the only cell configured with a PUCCH in the K cells.

As one embodiment, the meaning of the sentence "the second field of the first DCI is used to determine the first cell" comprises: the second field comprises at least one of the K subfields, the K subfields are respectively used to determine the K cell indexes, and the first cell is a cell indicated by a subfield located at the target position in the K subfields.

As one embodiment, the meaning of the sentence "the second field of the first DCI is used to determine the first cell" comprises: the second field comprises at least one of the K subfields, the K subfields are respectively used to determine the K cell indexes, and the first CSI set is sent on the PUSCH of a cell indicated by a subfield located at the target position in the K subfields.

### Embodiment 9

Embodiment 9 illustrates a schematic diagram of a first bit set according to one embodiment of the present application, as shown in FIG. 9.

In Embodiment 9, a first bit set comprises a plurality of bits or bit fields in a first DCI, and the plurality of bits or bit fields are discontinuous or discrete in the first DCI. If the first DCI comprises the first-type information for the first BWP, a position of a bit field used to indicate the first-type information for the first BWP in the first bit set depends on at least one of a BWP-Id of the first BWP and a cell identity of the first serving cell.

As one embodiment, the first bit set belongs to bits in the first DCI that are not used to schedule a first-type BWP. The first-type BWP is a BWP in the at least first BWP that is already active before receiving the first DCI (i.e., the first DCI does not change an active state of the first-type BWP).

As one embodiment, the first bit set belongs to bits in the first DCI that are not used to indicate second-type scheduling information. A bit width (i.e., the number of bits) of the second-type scheduling information in the first DCI does not change with the first configuration.

As one embodiment, the bit width of the second-type scheduling information in the first DCI is fixed, or the bit width of the second-type scheduling information in the first DCI depends only on a DCI format of the first DCI, or the bit width of the second-type scheduling information in the first DCI depends on parameters used to configure a serving cell and not used to configure a particular BWP.

As one embodiment, the bit width of the second-type scheduling information in the first DCI depends on a *ServingCellConfig* IE, does not depend on a BWP-Downlink field in the *ServingCellConfig* IE, and does not depend on a BWP-Uplink field in the *ServingCellConfig* IE.

As one embodiment, indicator bits of the second-type scheduling information comprise a time domain resource assignment (TDRA) field.

As one embodiment, the indicator bits of the second-type scheduling information comprise a carrier indicator (CI) field.

As one embodiment, the indicator bits of the second-type scheduling information comprise a bandwidth part indicator (BWP indicator) field.

As one embodiment, the indicator bits of the second-type scheduling information comprise a hybrid automatic repeat reQuest (HARQ) process number field.

As one embodiment, the indicator bits of the second-type scheduling information comprise a transmit power control (TPC) command.

The indicator bits of the above-mentioned second-type scheduling information are common for both an uplink grant signaling and a downlink grant signaling and can be combined arbitrarily.

As one embodiment, the first DCI is an uplink grant signaling, and indicator bits of the second-type scheduling information comprise fields such as a downlink assignment index (DAI) and an uplink/supplementary uplink indicator (UL/SUL indicator).

As one embodiment, the first DCI is a downlink grant signaling, and the indicator bits of the second-type scheduling information comprise fields such as virtual resource block (VRB) to physical resource block (PRB) mapping, an MCS for a transport block 1, an RV for the transport block 1, an NDI for the transport block 1, a PUCCH resource indicator, and a PDSCH-to-HARQ_feedback timing indicator.

As one embodiment, a position of a bit field used to indicate the first-type information for the first BWP in the first bit set varies with at least one of the BWP-Id of the first BWP and the cell identity of the first serving cell.

In the above-mentioned embodiment, BWPs are scheduled according to a priority to ensure the scheduling of high-priority BWPs under the condition of an insufficient DCI payload size. The specific scheme can be analogous to the implementation method in Embodiment 5.

As one embodiment, bits used to indicate the first-type information for the first BWP comprise at least some bits in two bit fields; the two bit fields are two fields in a DCI format of the first DCI assuming that the first DCI does not change an active uplink BWP or an active downlink BWP (i.e., each of the at least first BWP indicated by the first DCI is one of the Q1 BWPs).

In the above-mentioned embodiment, reinterpretation of the first bit set is no longer limited by the constraints of an original bit field, which can avoid bit waste.

As one embodiment, the number of bits used to indicate the first-type information for the first BWP in the first DCI depends on a configuration signaling of the first BWP.

As one embodiment, the configuration signaling comprises a BWP-Uplink or a BWP-Downlink.

As one embodiment, a position of the bit field used to indicate the first-type information for the first BWP in a first bit set of the first DCI depends on at least one of a BWP-Id of the first BWP and a cell identity of the first serving cell; and the first bit set of the first DCI is not used to schedule a first-type BWP and is not used to indicate second-type scheduling information, the first-type BWP is a BWP that belongs to both the Q1 BWPs and the at least first BWP, and the number of bits in the first DCI that are used to indicate the second-type scheduling information does not change with the candidate states of the first configuration.

As one embodiment, a payload size of the first DCI does not depend on a configuration signaling of the first BWP.

As one embodiment, the first DCI is used for uplink grant, the first configuration comprises whether a PTRS-DMRS association field is present or not, the first state comprises an absence of the PTRS-DMRS association field, the second state comprises a presence of the PTRS-DMRS association field, and the first-type information comprises an association between a PTRS port and a DMRS port; and the traditional DCI format comprises DCI format 0_1 and DCI format 0_2.

As one embodiment, the first DCI is used for downlink grant, the first configuration is *maxNrofCodeWordsScheduledByDCI,* the first state is 1, the second state is 2, the first-type information comprises an NDI for a transport block 2, and the traditional DCI format comprises DCI format 1_1.

As one sub-embodiment of the above-mentioned embodiment, the first-type information comprises an RV for the transport block 2 and an MCS for the transport block 2.

As one embodiment, the first DCI is used for downlink grant, the first configuration is a presence of a TCI in DCI, the first state is being not enabled, the second state is being enabled, and the first-type information comprises a TCI-state; and the traditional DCI format comprises DCI format 1_1 and DCI format 1_2.

As one sub-embodiment of the above-mentioned embodiment, the traditional DCI format comprises DCI format 4_2.

As one sub-embodiment of the above-mentioned embodiment, the first configuration comprises tci-PresentInDCI.

As one sub-embodiment of the above-mentioned embodiment, the first configuration comprises tci-PresentDCI-1-2.

### Embodiment 10

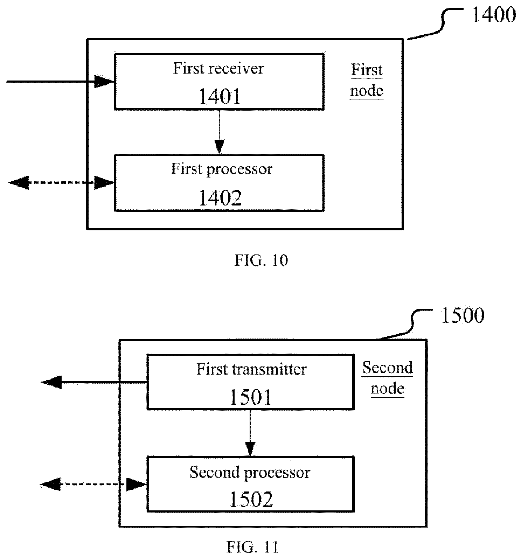

Embodiment 10 illustrates a structural block diagram of a processing apparatus in a first node according to one embodiment of the present application, as shown in FIG. 10. In FIG. 10, a processing apparatus 1400 in the first node comprises a first receiver 1401 and a first processor 1402.

In Embodiment 10, the first receiver 1401 receives a first message set and first DCI, wherein a first configuration of each BWP in at least a first BWP depends on the first message set, and the first DCI indicates the at least first BWP; and the first processor 1402, in response to receiving the first DCI, operates a wireless signal on the at least first BWP; and
in Embodiment 10, the operation is receiving, or the operation is sending; candidate state of the first configuration comprises a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; and the first configuration applied to the first BWP is the second state, and whether the first DCI comprises the first-type information for the first BWP depends on the first message set.

As one embodiment, the first configuration of each BWP in Q1 BWPs depends on the first message set, the Q1 being a positive integer greater than 1; and at least one BWP in the Q1 BWPs does not belong to the at least first BWP.

As one embodiment, in the Q1 BWPs, the first configuration of only Q2 BWPs is the second state, the Q2 being a positive integer not greater than the Q1; and when a first configuration in the at least first BWP is the number of BWPs of the second state not exceeding the Q2, the first DCI comprises the first-type information for the first BWP.

As one embodiment, whether the first DCI comprises the first-type information for the first BWP depends on at least one of a BWP-Id of the first BWP and a cell identity of the first serving cell.

As one embodiment, if the first DCI comprises the first-type information for the first BWP, a position of a bit field used to indicate the first-type information for the first BWP in the first DCI depends on at least one of a BWP-Id of the first BWP and a cell identity of the first serving cell.

As one embodiment, the operation is sending; the first configuration is whether a PTRS-DMRS association field is present or not, the first state is an absence of the PTRS-DMRS association field, the second state is a presence of the PTRS-DMRS association field, and the first-type information is an association between a PTRS port and a DMRS port.

As one sub-embodiment of the above-mentioned embodiment, the first configuration is configured by parameters such as *PTRS-UplinkConfig,* whether a transform precoder is enabled, and *maxRank.* For specific implementations, refer to TS38.212.

As one embodiment, the first configuration is *maxNrofCodeWordsScheduledByDCI,* the first state is 1, the second state is 2, and the first-type information comprises an NDI for a transport block 2.

As one embodiment, the first configuration is a presence of a TCI in DCI, the first state is being not enabled, the second state is being enabled, and the first-type information comprises a TCI-state.

As one embodiment, the first receiver 1401 comprises part or all of {an antenna 452, a receiving device 454, a receiving processor 456, a multi-antenna receiving processor 458, a controller/processor 459, a memory 460, and a data source 467} in Embodiment 4.

As one embodiment, the first processor 1402 comprises part or all of {an antenna 452, a transmitting device 454, a transmitting processor 468, a multi-antenna transmitting processor 457, a controller/processor 459, a memory 460, and a data source 467} in Embodiment 4.

As one embodiment, the first processor 1402 comprises part or all of {an antenna 452, a receiving device 454, a receiving processor 456, a multi-antenna receiving processor 458, a controller/processor 459, a memory 460, and a data source 467} in Embodiment 4.

### Embodiment 11

Embodiment 11 illustrates a structural block diagram of a processing apparatus for a second node according to one embodiment of the present application, as shown in FIG. 11. In FIG. 11, a processing apparatus 1500 in the second node comprises a first transmitter 1501 and a second processor 1502.

In Embodiment 11, the first transmitter 1501 sends a first message set and first DCI, wherein a first configuration of each BWP in at least a first BWP depends on the first message set, and the first DCI indicates the at least first BWP;
the second processor 1502, in response to sending the first DCI, executes a wireless signal on the at least first BWP; and
in Embodiment 11, the execution is sending, or the execution is receiving; candidate states of the first configuration comprise a first state and a second state; compared with a traditional DCI format configured with the first state, the traditional DCI format configured with the second state additionally indicates first-type information; the traditional DCI format merely indicates one BWP, and a DCI format of the first DCI indicates a plurality of BWPs at most; the first BWP is located on a first serving cell, and a first configuration of an active BWP on the first serving cell is the first state; and the first configuration applied to the first BWP is the second state, and whether the first DCI comprises the first-type information for the first BWP depends on the first message set.

As one embodiment, the first configuration of each BWP in Q1 BWPs depends on the first message set, the Q1 being a positive integer greater than 1; and at least one BWP in the Q1 BWPs does not belong to the at least first BWP.

As one embodiment, in the Q1 BWPs, the first configuration of only Q2 BWPs is the second state, the Q2 being a positive integer not greater than the Q1; and when a first configuration in the at least first BWP is the number of BWPs of the second state not exceeding the Q2, the first DCI comprises the first-type information for the first BWP.

As one embodiment, whether the first DCI comprises the first-type information for the first BWP depends on at least one of a BWP-Id of the first BWP and a cell identity of the first serving cell.

As one embodiment, if the first DCI comprises the first-type information for the first BWP, a position of a bit field used to indicate the first-type information for the first BWP in the first DCI depends on at least one of a BWP-Id of the first BWP and a cell identity of the first serving cell.

As one embodiment, the operation is sending; the first configuration is whether a PTRS-DMRS association field is present or not, the first state is an absence of the PTRS-DMRS association field, the second state is a presence of the PTRS-DMRS association field, and the first-type information is an association between a PTRS port and a DMRS port.

As one embodiment, the first configuration is *maxNrofCodeWordsScheduledByDCI,* the first state is 1, the second state is 2, and the first-type information comprises an NDI for a transport block 2.

As one embodiment, the first configuration is a presence of a TCI in DCI, the first state is being not enabled, the second state is being enabled, and the first-type information comprises a TCI-state.

As one embodiment, the first transmitter 1501 comprises part or all of {an antenna 420, a transmitting device 418, a transmitting processor 416, a multi-antenna transmitting processor 471, a controller/processor 475, and a memory 476} in Embodiment 4.

As one embodiment, the second processor 1502 comprises part or all of {an antenna 420, a receiving device 418, a receiving processor 470, a multi-antenna receiving processor 472, a controller/processor 475, and a memory 476} in Embodiment 4.

As one embodiment, the second processor 1502 comprises part or all of {an antenna 420, a transmitting device 418, a transmitting processor 416, a multi-antenna transmitting processor 471, a controller/processor 475, and a memory 476} in Embodiment 4.

Those of ordinary skill in the art can understand that all or part of the steps in the above-mentioned method can be completed by instructing relevant hardware through a program, and the program can be stored in a computer-readable storage medium, such as a read-only memory, a hard disk or an optical disk. Optionally, all or part of the steps of the above-mentioned embodiments can also be implemented using one or more integrated circuits. Correspondingly, each module unit in the above-mentioned embodiments can be implemented in the form of hardware or in the form of software functional modules. The present application is not limited to any specific form of combination of software and hardware. The user equipment, terminals and the UE in the present application include but are not limited to drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, RFID terminals, NB-IOT terminals, machine type communication (MTC) terminals, enhanced MTC (eMTC) terminals, data cards, Internet cards, vehicle-mounted communication devices, low-cost mobile phones, low-cost tablet computers and other wireless communication devices. The base stations or system devices in the present application include but are not limited to macrocell base stations, microcell base stations, small cell base stations, femtocells, relay base stations, eNBs, gNBs, transmitter receiver points (TRPs), GNSSs, relay satellites, satellite base stations, aerial base stations, road side units (RSUs), drones, test devices, and wireless communication devices such as transceiving apparatus or signaling testers that simulate some functions of base stations.

It should be understood by those skilled in the art that the present invention may be implemented in other specified forms without departing from its core or basic features. Therefore, the embodiments disclosed herein should be considered as descriptive rather than restrictive in any way. The scope of the invention is determined by the appended claims rather than the foregoing description, and all modifications within their equivalent meanings and areas are considered to be comprised therein.

## Claims

1. A first node for wireless communication, comprising:
a first receiver, configured to receive a first message set and first DCI, wherein a first configuration of each BWP in at least a first BWP depends on the first message set, and the first DCI indicates the at least first BWP; and
a first processor, configured to, in response to receiving the first DCI, operate a wireless signal on the at least first BWP,
wherein the operation is receiving or the operation is sending; candidate states of the first configuration comprise a first state and a second state; compared with a traditional DCI format configured with the first state, the traditional DCI format configured with the second state additionally indicates first-type information; the traditional DCI format merely indicates one BWP, and the DCI format of the first DCI indicates a plurality of BWPs at most; the first BWP is located on a first serving cell, and the first configuration of an active BWP on the first serving cell is the first state; the first configuration applied to the first BWP is the second state, and whether the first DCI comprises the first-type information for the first BWP depends on the first message set.

2. The first node according to claim 1, wherein the first configuration of each BWP in Q1 BWPs depends on the first message set, Q1 being a positive integer greater than 1; and at least one BWP in the Q1 BWPs does not belong to the at least first BWP.

3. The first node according to claim 2, wherein the first configuration of only Q2 BWPs in the Q1 BWPs is the second state, Q2 being a positive integer not greater than Q1; when the number of BWPs whose first configuration is the second state in the at least first BWP does not exceed Q2, the first DCI comprises the first-type information for the first BWP.

4. The first node according to claim 2 or 3, wherein whether the first DCI comprises the first-type information for the first BWP depends on at least one of a BWP-Id of the first BWP and a cell identity of the first serving cell.

5. The first node according to any one of claims 1 to 4, wherein if the first DCI comprises the first-type information for the first BWP, a position of a bit field used to indicate the first-type information for the first BWP in the first DCI depends on at least one of the BWP-Id of the first BWP and the cell identity of the first serving cell.

6. The first node according to any one of claims 1 to 5, wherein the operation is sending; the first configuration comprises whether a PTRS-DMRS association field is present or not, the first state comprises an absence of the PTRS-DMRS association field, the second state comprises a presence of the PTRS-DMRS association field, and the first-type information comprises an association between a PTRS port and a DMRS port.

7. The first node according to any one of claims 1 to 5, wherein the first configuration is *maxNrofCodeWordsScheduledByDCI,* the first state is 1, the second state is 2, and the first-type information comprises an NDI for a transmission block 2.

8. The first node according to any one of claims 1 to 5 and 7, wherein the first configuration is a presence of a TCI in the DCI, the first state is being not enabled, the second state is being enabled, and the first-type information comprises a TCI-state.

9. A second node for wireless communication, comprising:
a first transmitter, configured to send a first message set and first DCI, wherein a first configuration of each BWP in at least a first BWP depends on the first message set, and the first DCI indicates the at least first BWP; and
a second processor, configured to, in response to sending the first DCI, execute a wireless signal on the at least first BWP;
wherein the execution is sending or the execution is receiving; candidate states of the first configuration comprise a first state and a second state; compared with a traditional DCI format configured with the first state, the traditional DCI format configured with the second state additionally indicates first-type information; the traditional DCI format merely indicates one BWP, and the DCI format of the first DCI indicates a plurality of BWPs at most; the first BWP is located on a first serving cell, and the first configuration of an active BWP on the first serving cell is the first state; the first configuration applied to the first BWP is the second state, and whether the first DCI comprises the first-type information for the first BWP depends on the first message set.

10. The second node according to claim 9, wherein the first configuration of each BWP in Q1 BWPs depends on the first message set, Q1 being a positive integer greater than 1; and at least one BWP in the Q1 BWPs does not belong to the at least first BWP.

11. The second node according to claim 9 or 10, wherein the first configuration of only Q2 BWPs in the Q1 BWPs is the second state, Q2 being a positive integer not greater than Q1; when the number of BWPs whose first configuration is the second state in the at least first BWP does not exceed Q2, the first DCI comprises the first-type information for the first BWP.

12. The second node according to any one of claims 9 to 11, wherein whether the first DCI comprises the first-type information for the first BWP depends on at least one of a BWP-Id of the first BWP and a cell identity of the first serving cell.

13. The second node according to any one of claims 9 to 12, wherein if the first DCI comprises the first-type information for the first BWP, a position of a bit field used to indicate the first-type information for the first BWP in the first DCI depends on at least one of the BWP-Id of the first BWP and the cell identity of the first serving cell.

14. The second node according to any one of claims 9 to 13, wherein the operation is sending;
the first configuration is whether a PTRS-DMRS association field is present or not, the first state is an absence of the PTRS-DMRS association field, the second state is a presence of the PTRS-DMRS association field, and the first-type information is an association between a PTRS port and a DMRS port.

15. The second node according to any one of claims 9 to 14, wherein the first configuration is maxNrofCodeWordsScheduledByDCI, the first state is 1, the second state is 2, and the first-type information comprises an NDI for a transmission block 2.

16. The second node according to any one of claims 9 to 15, wherein the first configuration is a presence of a TCI in the DCI, the first state is being not enabled, the second state is being enabled, and the first-type information comprises a TCI-state.

17. A method used in a first node for wireless communication, comprising:
receiving a first message set and first DCI, wherein a first configuration of each BWP in at least a first BWP depends on the first message set, and the first DCI indicates the at least first BWP; and
in response to receiving the first DCI, operating a wireless signal on the at least first BWP,
wherein the operation is receiving or the operation is sending; candidate states of the first configuration comprise a first state and a second state; compared with a traditional DCI format configured with the first state, the traditional DCI format configured with the second state additionally indicates first-type information; the traditional DCI format merely indicates one BWP, and the DCI format of the first DCI indicates a plurality of BWPs at most; the first BWP is located on a first serving cell, and the first configuration of an active BWP on the first serving cell is the first state; the first configuration applied to the first BWP is the second state, and whether the first DCI comprises the first-type information for the first BWP depends on the first message set.

18. The method used in a first node according to claim 17, wherein the first configuration of each BWP in Q1 BWPs depends on the first message set, Q1 being a positive integer greater than 1; and at least one BWP in the Q1 BWPs does not belong to the at least first BWP.

19. The method used in a first node according to claim 17 or 18, wherein the first configuration of only Q2 BWPs in the Q1 BWPs is the second state, Q2 being a positive integer not greater than Q1; when the number of BWPs whose first configuration is the second state in the at least first BWP does not exceed Q2, the first DCI comprises the first-type information for the first BWP.

20. The method used in a first node according to any one of claims 17 to 19, wherein whether the first DCI comprises the first-type information for the first BWP depends on at least one of a BWP identity (BWP-Id) of the first BWP and a cell identity of the first serving cell.

21. The method used in a first node according to any one of claims 17 to 20, wherein if the first DCI comprises the first-type information for the first BWP, a position of a bit field used to indicate the first-type information for the first BWP in the first DCI depends on at least one of the BWP-Id of the first BWP and the cell identity of the first serving cell.

22. The method used in a first node according to any one of claims 17 to 21, wherein the operation is sending; the first configuration comprises whether a phase-tracking reference signal (PTRS)-demodulation reference signal (DMRS) association field is present or not, the first state comprises an absence of the PTRS-DMRS association field, the second state comprises a presence of the PTRS-DMRS association field, and the first-type information comprises an association between a PTRS port and a DMRS port.

23. The method used in a first node according to any one of claims 17 to 22, wherein the first configuration is maxNrofCodeWordsScheduledByDCI, the first state is 1, the second state is 2, and the first-type information comprises an NDI for a transmission block 2.

24. The method used in a first node according to any one of claims 17 to 23, wherein the first configuration is a presence of a TCI in the DCI, the first state is being not enabled, the second state is being enabled, and the first-type information comprises a TCI-state.

25. A method used in a second node for wireless communication, comprising:
sending a first message set and first DCI, wherein a first configuration of each BWP in at least a first BWP depends on the first message set, and the first DCI indicates the at least first BWP; and
in response to sending the first DCI, executing a wireless signal on the at least first BWP;
wherein the execution is sending or the execution is receiving; candidate states of the first configuration comprise a first state and a second state; compared with a traditional DCI format configured with the first state, the traditional DCI format configured with the second state additionally indicates first-type information; the traditional DCI format merely indicates one BWP, and the DCI format of the first DCI indicates a plurality of BWPs at most; the first BWP is located on a first serving cell, and the first configuration of an active BWP on the first serving cell is the first state; the first configuration applied to the first BWP is the second state, and whether the first DCI comprises the first-type information for the first BWP depends on the first message set.

26. The method used in a second node according to claim 25, wherein the first configuration of each BWP in Q1 BWPs depends on the first message set, Q1 being a positive integer greater than 1; and at least one BWP in the Q1 BWPs does not belong to the at least first BWP.

27. The method used in a second node according to claim 25 or 26, wherein the first configuration of only Q2 BWPs in the Q1 BWPs is the second state, Q2 being a positive integer not greater than Q1; when the number of BWPs whose first configuration is the second state in the at least first BWP does not exceed Q2, the first DCI comprises the first-type information for the first BWP.

28. The method used in a second node according to any one of claims 25 to 27, wherein whether the first DCI comprises the first-type information for the first BWP depends on at least one of a BWP-Id of the first BWP and a cell identity of the first serving cell.

29. The method used in a second node according to any one of claims 25 to 28, wherein if the first DCI comprises the first-type information for the first BWP, a position of a bit field used to indicate the first-type information for the first BWP in the first DCI depends on at least one of the BWP-Id of the first BWP and the cell identity of the first serving cell.

30. The method used in a second node according to any one of claims 25 to 29, wherein the execution is receiving; the first configuration comprises whether a PTRS-DMRS association field is present or not, the first state comprises an absence of the PTRS-DMRS association field, the second state comprises a presence of the PTRS-DMRS association field, and the first-type information comprises an association between a PTRS port and a DMRS port.

31. The method used in a second node according to any one of claims 25 to 30, wherein the first configuration is maxNrofCodeWordsScheduledByDCI, the first state is 1, the second state is 2, and the first-type information comprises an NDI for a transmission block 2.

32. The method used in a second node according to any one of claims 25 to 31, wherein the first configuration is a presence of a TCI in the DCI, the first state is being not enabled, the second state is being enabled, and the first-type information comprises a TCI-state.
